# EUROPEAN PATENT APPLICATION

(11) **EP 1 381 205 A1**
(43) Date of publication of application: **14.01.2004**
(21) Application number: 02445139.5
(22) Date of filing: 22.10.2002
(51) Int. Cl.: H04M 1/02, H04M 1/725

(54) **Radio communication terminal comprising detachable housings with integrated functional modules**

(30) Priority: 12.07.2002 EP 02445098
(71) Applicant: Sony Ericsson Mobile Communications AB, 221 88 Lund (SE)
(72) Inventor: Frohlund, Stig, 281 38 Hässleholm (SE); Holmberg, Per, 240 10 Dalby (SE); Begic, Stjepan, 214 66 Malmö (SE)
(74) Representative: Akerman, Marten Lennart

(57) **Abstract**

A modular radio communication terminal (40), comprising a user input and output interface (18,19), data processing means for controlling terminal functions, and a releasable cover (30), wherein attaching means (36,27) are provided for releasable attachment of the cover. The radio communication terminal comprises a stripped terminal core (1) carrying radio communication means and said user input and output, and a first cover comprising an auxiliary functional member (32) that is added to the functions of the terminal core when the first cover is attached thereto.

## Description

### Field of the invention

The present invention relates generally to radio communication terminals having a detachable housing or cover, and to such detachable housings or covers. In particular, the invention relates to a modular concept for radio communication terminals, with detachable active covers devised to provide functional modules for a radio communication terminal.

### Background

The first commercially attractive cellular telephones or terminals were introduced in the market at the end of the 1980's. Since then, a lot of effort has been made in making smaller terminals, with much help from the miniaturisation of electronic components and the development of more efficient batteries. Today, numerous manufacturers offer pocket-sized terminals with a wide variety of capabilities and services, such as packet-oriented transmission and multiple radio band coverage.

In order to attract customers the terminal manufacturers have therefore taken further measures to strengthen their position in the competition, one such being to offer terminals with detachable covers or covers. If a user wishes to change the outer appearance of his communication terminal, he can simply buy a new cover of the desired kind. The old cover is preferably released by a simple grip without the aid of tools, where after the new cover can be snapped on. A detachable cover is generally a fairly simple element, essentially formed from a single piece of plastic or possibly metal. The cover may represent only the front side of the terminal, i.e. the side of the terminal carrying the user interface generally comprising a terminal display and keypad, a microphone and a loudspeaker. In such a design, the cover forms a separate part of the cover of the terminal, or optionally an auxiliary part to be attached outside the cover. Alternatively, the cover may include more than one piece, e.g. a front piece and a back piece devised to substantially enclose the terminal. The detachable covers are often provided in different colours, and also with more advanced patterns such as logos or images.

The detachable covers of the prior art mainly create an aesthetic effect, changing the visual appearance of the terminal. They do not, however, have any effect on the functions of the terminal. Other solutions for creating this aesthetic effect, without having to change the cover, have also been proposed.

EP 1079584 by Laurikka et al discloses a cover for an electronic device, such as a communication terminal, whose colour can be changed by means of a control signal. That cover is advantageously produced by using a material, which changes its colour as a result of the effect of an electric or electromagnetic control signal. Such a material is for example electronic ink, with which a conventional cover is coated. The appearance of cover can hence be controlled by a signal from the communication terminal. When a call or a text message arrives in the communication terminal, it indicates this to the user by changing the colour of the cover.

Also EP 564127 by Blonder shows an apparatus cover capable of changing colour. The cover has a transparent outer layer, covering a layer of electrically switchable light modulating material. This invention too suggests indicating e.g. a telephone ring by changing the cover colour.

The mobile phone is nowadays an essentially mature type of product, and to just be able to make phone calls is no longer enough to attract buyers. It is therefore necessary to add functions to the phone. At the same time, the different types of auxiliary functions are constantly changing and developing, making it difficult and costly to rapidly respond to these demands by issuing new terminal models. Today, the set of functions to be included in the final terminal product is defined already at the start of the development project for a new terminal model, and it cannot easily be changed later on. Terminals are developed and subsequently sold in series with different features and at different prices. Such features include e.g. touch-screen, speakerphone, special buttons etc. Normally, the only thing that can be changed for the user is the appearance of the cover, and the software controlling ring signals and displayed images.

### Summary of the invention

A problem with portable communication terminals of today is that it is expensive to produce a wide variety of different phones in order to attract a large market. Furthermore, some features or parts of the terminals develop faster than other features, which means that one outdated part might decrease the market value for the entire terminal, even if it is otherwise fully competitive. Adding a new feature or function in an on-going project results in major re-design work and delayed product launch. An object of the present invention is therefore to provide a solution for making portable communication terminals suit a wider range of customers, and more easily adaptable to various functions, before and after production start.

According to a first aspect, this object is fulfilled by a modular radio communication terminal, comprising a user input and output interface, data processing means for controlling terminal functions, and a releasable cover, wherein attaching means are provided for releasable attachment of the cover.Said radio communication terminal comprises a stripped terminal core carrying radio communication means and said user input and output, and a first cover comprises an auxiliary functional member that is added to the functions of the terminal core when the first cover is attached thereto.

Preferably, said terminal core comprises the data processing means and a cover connector connected to the data processing means, and said first cover comprises a terminal connector connected to the auxiliary functional member, wherein said cover connector and terminal connector are devised to provide communicative connection for the auxiliary functional member of an attached first cover to the data processing means of the terminal core.

In one embodiment, said first cover comprises a further cover connector connected to said terminal connector, and further attaching means, such that attachment of a second cover on the first cover provides access for a further functional member in said second cover to said data processing means.

Said first cover may comprise a shell member devised to cover a portion of a front face of the terminal core. Alternatively, or additionally, said first cover may comprise a shell member devised to cover a portion of a rear face of the terminal core.

According to a second aspect, the object of the invention is fulfilled by a disconnectable cover for a modular radio communication terminal of the aforementioned kind, comprising attaching means for releasable attachment of the cover to a terminal core, wherein said cover comprises a terminal connector devised to provide bus connectivity with said terminal upon attachment, and an auxiliary functional member connected to said terminal connector for providing a function to the terminal when the cover is attached thereto.

Preferably, said auxiliary functional member is devised to affect or add to the function of an attached terminal core, and comprises a micro controller.

In one embodiment, the terminal connector comprises a biased resilient connector element, connectable to conductive connection pads arranged in the cover connector of the terminal core.

Said functional member may e.g. comprise a touch-sensitive display, a speaker for hands free operation, a digital image recorder, solely or in combination with each other or other functional members.

In one embodiment, said cover is a first cover, directly attachable to a terminal core, wherein said first cover comprises a further cover connector connected to said terminal connector, and further attaching means, such that attachment of a second cover on the first cover provides access for a further functional member in said second cover to said data processing means.

According to a third aspect, the object of the invention is fulfilled by a terminal core for a radio communication terminal of the aforementioned kind, comprising data processing means and attaching means for releasable attachment of a cover to the terminal core, wherein said terminal core carries radio communication means and said user input and output, and where functions of the terminal core may be affected or added by attachment of a first cover comprising an auxiliary functional member.

In one embodiment, said it comprises a cover connector connected to the data processing means, such that attachment of a cover carrying an auxiliary functional member and a terminal connector connected to the auxiliary functional member, provides an auxiliary function to the terminal core through the cooperating cover and terminal connectors.

The terminal core may comprise a main terminal PCB carrying electronic circuits for the terminal, and an additional PCB connected to said electronic circuits, wherein said cover connector is disposed on said additional PCB.

In one embodiment, said terminal core comprises a plurality of cover connectors connected to the data processing means, for attachment of plural covers.

The detailed description shows specific features of various embodiments related to the aspects above.

### Brief description of the drawings

The features and advantages of the present invention will be more apparent from the following description of the preferred embodiments with reference to the accompanying drawings, on which
Fig. 1 schematically illustrates a communication terminal core as seen from the front, in accordance with an embodiment of the invention;
Fig. 2 illustrates the terminal core of Fig. 1 in a sectional side view;
Fig. 3 schematically shows the terminal core of Fig. 2 and two active covers that are connectable to the terminal core;
Fig. 4 illustrates a terminal comprising the assembled active covers and terminal core of Fig. 3;
Fig. 5 schematically illustrates an embodiment of a disassembled terminal comprising a terminal core and detachable covers;
Fig. 6 illustrates the modular concept of the present invention, nicluding a terminal core and different sets of cover modules;
Figs 7A - 11 illustrate various embodiments of active covers and there attachment to a terminal;
Figs 12 and 13 schematically illustrate disassembled terminals, each comprising a terminal core but with and different embodiments of detachable covers; and
Figs 14 - 17 schematically illustrate various embodiments of cover module configurations according to the invention.

### Detailed description of preferred embodiments

The present description relates to the field of radio communication terminals. The term radio terminal or communication terminal, also denoted terminal in short in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Hence, although the structure and characteristics of the antenna design according to the invention is mainly described herein, by way of example, in the implementation in a mobile phone, this is not to be interpreted as excluding the implementation of the inventive antenna design in other types of radio terminals, such as those listed above. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawings.

According to the invention, a final terminal product is comprised of a terminal core and one or more active terminal covers. The invention consequently presents a modular concept for a communication terminal, wherein a stripped core, carrying a limited set of features, is combined with a range of selectable covers, each carrying an additional functional feature to the terminal. An important merit with this invention is the reduction in development time and resources for each product. The flexible core terminal concept, wherein a comparably simple core terminal is modified or further provided with features by attached covers, will make it feasible to have several products out on the market almost to the cost of one development project. Regulations like type approval need only to be done once, for the core terminal, as the basic functionality such as the radio characteristics will be the same.

The terminal core includes the basic features and elements of a radio communication terminal, and is preferably fully operable without the releasable cover. However, in a preferred embodiment, the core telephone or terminal is stripped from its protective housing, lacking at least a front or rear cover. By active covers is here meant that the covers, besides providing a protective housing and an aesthetic effect, can include a functional member e.g. including electronics that together with the terminal or phone provides additional and/or modified functions. For this purpose, the terminal is provided with a cover connector, connectable to a co-operating terminal connector on the releasable cover. Furthermore, means for attaching and securing the cover or covers to the terminal are also included, devised in a co-operating manner, though not shown in all the drawings. The attaching means may be arranged in any suitable shape, several of which are well known to the skilled person and used today. The covers may e.g. be snapped on and maintained in place by a spring force, or be screwed on. The specific manner is not crucial for the present invention. The selectable range of attachable covers will also include covers which provide an additional function, but which do not have data communication capabilities with the core terminal. The cover may therefore include or provide an additional function that is of a more mechanical nature.

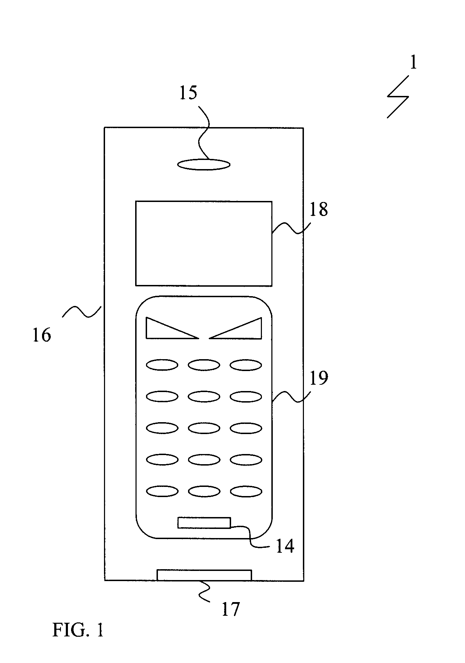

Fig. 1 illustrates the front face of a terminal core 1, in the form of a cellular phone. Terminal core 1 is carried in a chassis 16, directly or indirectly supporting the other components of the terminal. Terminal core 1 is devised with a user-input interface, in the displayed embodiment comprising a microphone 14 and a keypad 19. The user input interface may also or comprise a touch-sensitive display in addition to or instead of the keypad 19. Furthermore, a user output interface of the Terminal core 1 comprises a loudspeaker 15 and a display 18. All of these features are well known in the prior art. Though not shown in Fig. 1, the terminal core 1 further includes an antenna, radio transmission and reception electronics, and a power supply preferably in the form of a battery. Communication terminal 1 is also devised with a computer system, including a microprocessor with associated memory and software. In order to co-operate and communicate with a releasable active cover, the terminal core 1 is further devised with a cover connector 17.

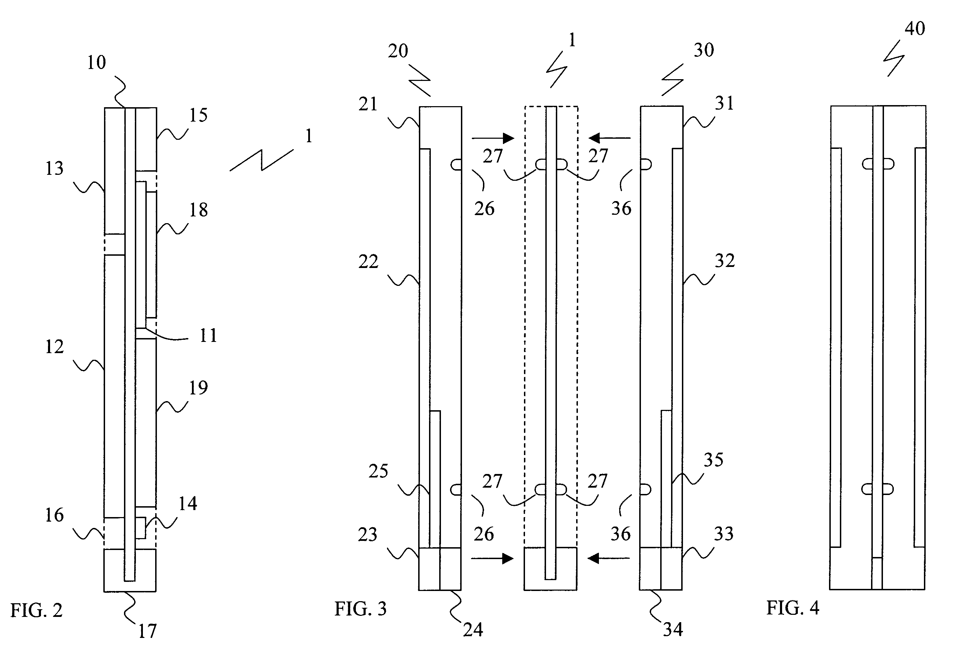

Fig. 2 illustrates the terminal core 1 in a sectional view from its left side, as seen in Fig. 1. In this drawing, the different operative parts of the terminal core are schematically shown, including those shown in Fig. 1. The chassis 16 is indicated by the dashed line, and its specific shape is not relevant. A printed circuit board PCB 10 carries the electronics 11 of the terminal core 1, preferably including data processing means such as a micro processor system, or the like, with associated memory. An antenna 13 is further included, the particular type of which is irrelevant to the invention. Typical antenna types include micro strip antennas, Planar Inverted-F Antennas PIFA, and stub antennas. A battery 12 is included to feed the electronics with electrical energy.

Fig. 3 illustrates the terminal core 1 and two releasable covers, a back cover 20 and a front cover 30. The arrows in Fig. 3 indicate that covers 20 and 30 are attachable to the terminal core 1. The illustration of the terminal core 1 in Fig. 3 further includes attaching means 27 in the purely exemplary shape of recesses formed in the sides of the terminal. Furthermore, the active covers 20, 30 are provided with protruding members 26 and 36, respectively, devised to latch into engagement with the corresponding recesses 27 in the terminal core 1. It should be noted that the present invention is not restricted to having both an active cover attached to the rear and the front of terminal core 1. On the contrary, these two active covers 20, 30 are preferably, but need not be, independent of each other, separately communicating with the terminal core 1. Therefore, only one of the covers 20, 30 may be attached, the drawing indicating both simply to show this possibility too. The specific character of the active covers 20, 30 is not shown in Fig. 2, but different examples are given below and in the subsequent drawings. Each cover 20, 30 has a shell part 21, 31, forming part of the exterior cover of the assembled terminal 40 when attached thereto. The shell part also carries, directly or indirectly, the other members of the respective active cover. One or both of the active cover 20, 30 may further include a terminal connector 24, 34. In one embodiment, the terminal connectors 24, 34 and the cooperating cover connector on the terminal core offer a full system bus connectivity. Each active cover 20, 30 in the disclosed embodiment also comprises a micro controller 25, 35, communicatively connected to the cover connector 24, 34. A functional member 22, 32, adding to or modifying the features of the terminal may also be included, connected to and controlled by the micro controller 25, 35. The micro controller 25, 35 preferably has a dedicated software stored therein, for the purpose of controlling the interaction with the terminal. The active cover may have its own power supply in the form of a small battery or capacitor, but preferably makes use of the terminal battery 12 through the terminal connector 24, 34. In one embodiment, yet another releasable cover may be attached onto a first attached cover, thereby providing a further function to the terminal. For this purpose the covers 20, 30 may also include cover connectors 23, 33.

Fig. 4 illustrates the assembled terminal 40, comprising terminal core 1 and the attached covers 20, 30, but without the separate parts of the terminal core 1 and the active covers 20, 30 indicated. As before, the assembled terminal may also comprise the terminal core 1 and only one active cover 20 or 30. Furthermore, there may be more than two active covers, attached beside or over each other. When the active covers 20, 30 are connected to the terminal core 1 they may fully enclose the terminal 1, but they may also occupy only parts of the exterior of the terminal core 1.

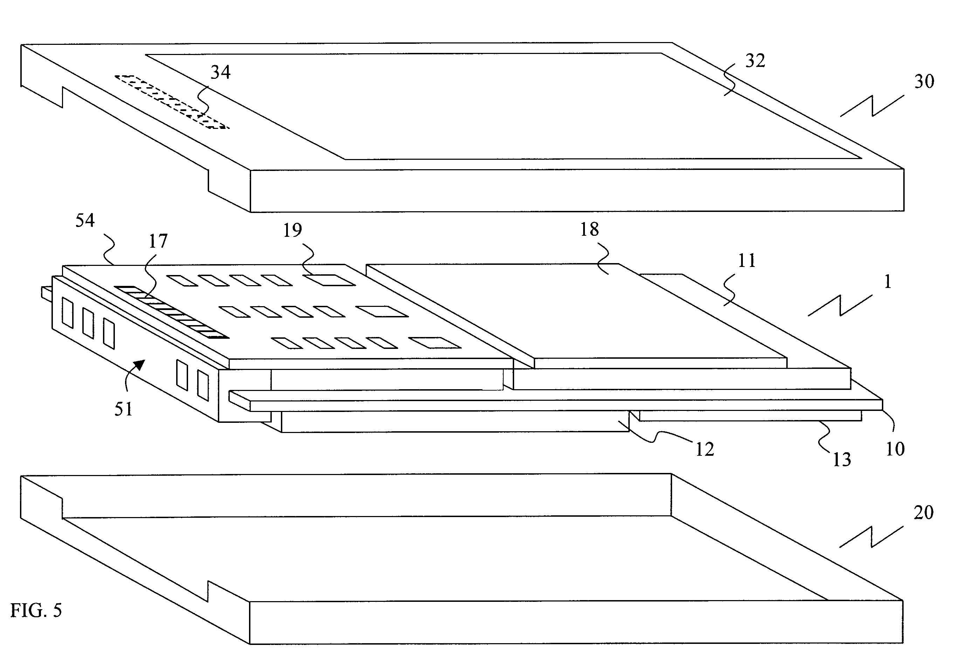

Fig. 5 illustrates an embodiment of a disassembled terminal core 1, showing the terminal core main PCB 10, the terminal core electronics 11 and the display 18. A system connector 50 is attached to the PCB 10, communicatively connected to the electronics 11. Facing downwards from the bottom side of the terminal core 1, i.e. left in the drawings, is the system connector interface 51, comprising connector poles and securing means for attaching auxiliary terminal accessories. The system connector interface 51 is accessible from the outside of the terminal core 1, and comprises a set of poles that for instance are usable for connecting the terminal to a battery charger without having to dismantle the battery 12 from the terminal 1. Furthermore, the system connector 50 includes poles for data communication with the terminal 1, which e.g. can be used for attaching auxiliary components to the assembled terminal, such as audio or video players or recorders, extra keypads, headsets, and so on.

Figs 5 illustrates an embodiment of the invention similar to that of Figs 2 to 4, in an elevated side view, wherein the cover connector 17 is arranged on a keyboard PCB 54. The keyboard PCB 54 is communicatively connected to the terminal core electronics 11, and is attached to the main PCB 10. The communication terminals of today, especially cellular radio communication terminals or phones, are extremely compact and dense, with almost no room for additional connection pads on the main PCB 10. By disposing the cover connector 17 on an unused area part of the keyboard PCB 54, the outer dimensions of the assembled product can be kept. This way, the functional covers of the present invention can be implemented without rendering larger terminals. It should be noted, though, that in alternative embodiments the cover connector may be disposed on another additional PCB that is connected to the electronic circuitry 11 of the terminal core 1. Other examples of such additional PCB types include e.g. a display PCB, a microphone PCB, or a completely separate PCB devised for this purpose. Furthermore, the cover connector 17 may be a branch of the system connector 50. Fig. 5 also shows attachable covers 20 and 30, and a terminal connector 34 and an added functional member 32 on the front cover 30. In order to provide access to the system connector 51, a recess is made in the attachable covers. The attaching means 26, 27, 36 are not shown in this drawing, but are of course included in this embodiment too. The may be devised such that the attaching means 26, 36 on the covers cooperate with each other, or such that the attaching means 26, 36 on the covers cooperate with the attaching means 27 on the terminal. Furthermore, it should be noted that only one of the covers may be detachable, e.g. the front cover 30, whereas the other cover member 20 is firmly attached to the terminal core 1.

The specific shape of the cover connector 17 is not disclosed in the drawings, but the cover connector 17 preferably includes an array of connection pads or poles. This array includes data communication poles or pads, for unidirectional or bidirectional communication between, on one hand, the terminal core electronics and micro controller system 11, and on the other hand the releasable cover. Furthermore, the cover connector 17 preferably includes power poles, such that the added function of the cover can be powered by the terminal core battery 12.

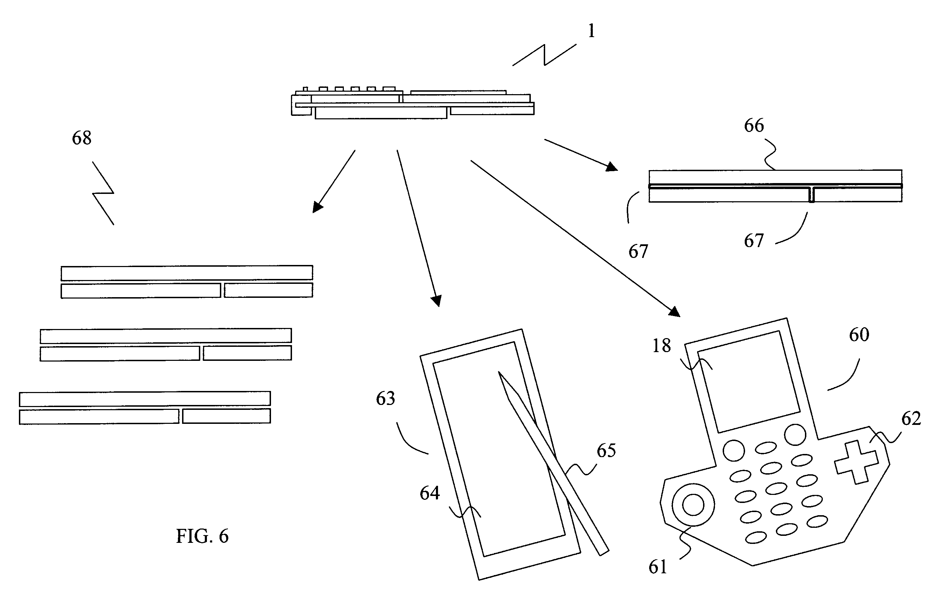

The terminal connector 34 of the cover 30 is not illustrated in detail either. Several different ways of realising this connector 34 are possible, for both data and power connection. One embodiment includes a pogo-pin solution for the terminal connector 34. Herein, the pogo-pin includes a socket, in which a piston is resiliently supported. The piston is electrically connected to the functional member 32 of the cover 30. The piston is biased such that it can be displaced into the socket when pressed towards the connection pad 17, while still exercising pressure towards the connection pad 17, thereby ensuring that a electrical contact is maintained between the terminal connector 34 and the cover connector 17. In this embodiment the cover connector pad 17 is preferably a separate metal member or a conductive layer on terminal core 1. Another embodiment includes a leaf spring type connector. The cover connector 17 is devised as a plated surface 17 on the edge of a PCB of the terminal core 1. A leaf spring is connected to the cover 20 or 30, and is electrically connected to the functional member 22 or 32 of the cover 20, 30. The leaf spring is biased and maintains a pressure towards the connector pad 17 when pressed towards it, thereby ensuring that a electrical contact is maintained between the terminal connector 34 and the cover connector 17. Yet another embodiment includes an elastomer type connector, arranged on the cover 20, 30. The elastomer connector is conductive, and is held in electrical contact with the connector pad 17 arranged on the terminal core 1. In all the aforementioned examples of the cover connector 17 is a simple connector pad, whereas the terminal connector 34 is a more complex device. It is emphasised, though, that the opposite arrangement also could be employed, with a simple connector pad on the terminal connector 24 or 34 of the cover 20 or 30, and the more complex device disposed on the cover connector 17 on the terminal core 1. As is illustrated in e.g. Figs 5 and 6, the cover connector 17 may be disposed on the keyboard PCB 54.

It may be noted that the both the microphone 14 and the speaker 15 of the terminal core 1 are left out in Figs 5 and 6. The purpose of this is merely to make the drawings as clear as possible. As the skilled person knows, the microphone 14 is a fairly small terminal member, and the cover connector 17 and the microphone 14 can easily be placed e.g. beside each other. The specific design of the speaker is not relevant to the realisation of the invention.

Fig. 6 illustrates a terminal core 1 as seen from a side. According to the invention, the terminal core 1 is connectable to different types of covers. Such covers may include a game console cover 60, devised for used when playing a game on the terminal 1. Said game console preferably includes with gaming controls, such as a joy stick 61 and a special key 62 for moving displayed images on the screen 18. Another example of an attachable cover is a front cover 63 carrying a touch-sensitive display 64, which can be operable by means of a stylus 65. Means for stowing the stylus 65 may also be included in the cover 63, such as a longitudinal recess or bore in the cover 63. Yet another example of an attachable cover is a water-proof cover 66, provided with a sealing 67 between different shell parts of the cover 66. In accordance wit the invention, the end terminal user may purchase a terminal core 1, either in its stripped embodiment, or provided with a first cover set. He or she may then modify the terminal by purchasing further cover sets and attach them to the terminal core 1. Advantageously, the end user may have numerous different cover sets 68 at his or her disposal, thereby being able to add features to or modify the existing features of the terminal core 1.

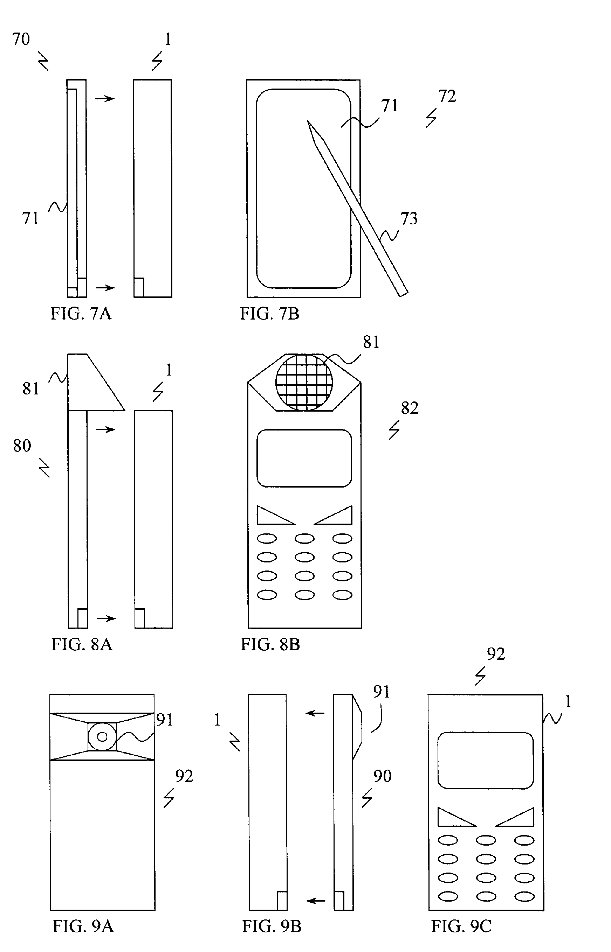

Figs 7A to 11 illustrate in a schematic manner some different embodiments of active covers to a terminal core 1. These rather simple drawings indicate the co-operating cover and terminal core connectors, and the member providing the optional feature, included in the active cover.

Fig. 7A illustrates a side view of a front cover 70 carrying a large touch-sensitive display 71, which cover 70 is connectable to terminal 1. Fig. 7B illustrates the assembled terminal 72 from the front, clearly showing the display 71. A stylus 72 can be used to input data to the terminal 1, 72 through the display 71.

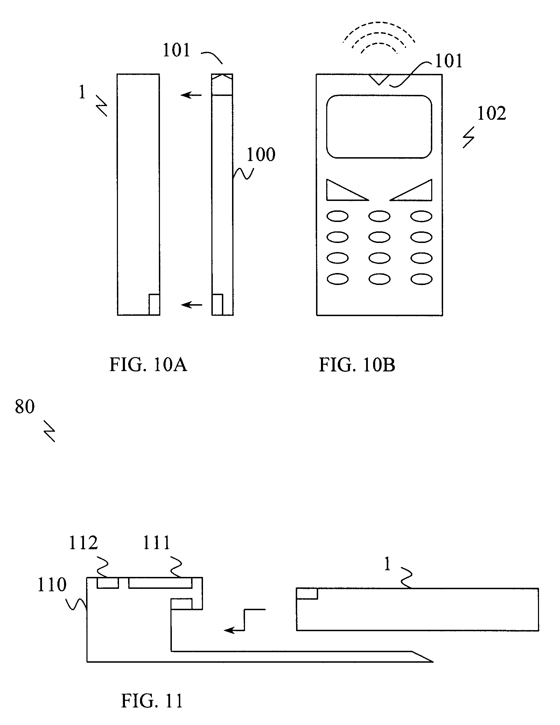

Fig. 8A illustrates a side view of a front cover 80 carrying an enlarged speaker 81 for hands free functionality, which cover 80 is connectable to terminal 1. Fig. 8B illustrates the assembled terminal 82 from the front, showing the hands free speaker 81. In the displayed embodiment the speaker 81 adds to the length of the terminal. Optionally, the speaker may be arranged to be positioned such that it instead adds to the height, i.e. thickness of the terminal. A different speakerphone arrangement is illustrated in Fig. 11, described below.

Fig. 9B illustrates a side view of a rear cover 90 carrying a digital image recorder 91, which cover 90 is connectable to terminal 1. Fig. 9A illustrates the assembled terminal 92 from the rear, indicating a lens of the digital image recorder 91. Fig. 9C illustrates the assembled terminal 92 from the front, where only the terminal 1 itself is visible since no front active cover has been attached. The digital image recorder may be a snapshot camera and/or a video recorder.

Fig. 10A illustrates a side view of a rear cover 100, carrying an auxiliary remote control 101, which cover 100 is connectable to terminal 1. Fig. 10B illustrates the assembled terminal 102 from the front, showing the face of terminal 1. The remote control sender, and possibly receiver, 101 is also indicated even though it may not be visible from the front. Such a remote control 101 may e.g. comprise an infrared transmitter, or a bluetooth chip.

Fig. 11 illustrates a rather different embodiment of a releasable active cover 110, although it relates to the embodiment of Figs 8A and 8B. First of all, this drawing illustrates another way of attaching the terminal 1 to the cover 110, more or less by sliding the terminal 1 into the cover 110 as indicated by the arrow. The active cover 110 is in this embodiment devised to provide conference telephone capabilities to a portable terminal 1. The active cover 110 may be devised to rest on a desktop or the like, and has a bottom rest surface for this purpose, facing downwards in the drawing. In alternative embodiments the active cover may of course be devised with the rest surface such that the terminal is maintained in a different position, such as straight up or at a tilted angle. The active cover 110 of Fig. 11 is shaped to receive the terminal 1 in a horizontal arrangement, as indicated in the drawing, where a side view of the terminal 1 is given. The active cover 110 has an enlarged speaker 111, or at least a more powerful speaker 111 than the ordinary terminal speaker, and the speaker 111 is therefore selected to be suitable for conveying sound to a wider audience than just one user holding the terminal to the ear. Preferably, the terminal 1 is placed in the active cover 110 with the front of the terminal 1 facing upwards, such that the terminal display and keypad can be conveniently used. The conference telephone active cover 110 may also be devised with suitable conference phone controls 112. Such controls include volume control and a secrecy function, such that the terminal is set to a listen only mode. The conference phone controls 112 preferably comprise buttons, the triggering of which is relayed to the terminal through the co-operating connectors of the cover 110 and the terminal 1.

The embodiments described above in conjunction with the drawings represent examples of how active covers according to the invention may be devised. However, many other examples are possible, a few of which are outlined here without reference to any specific drawing.

A front cover could be include a user input interface adapted to suit a certain category of users, such as children or elderly people. Such an active cover can have only a few large buttons with custom images and/or text, like "Nurse", "Daughter", "Taxi", "Mum", "Dad", "Home", "Work" etc. Preferably the logic contained in the software for the cover micro controller is also devised to set up the terminal 1 in a special way upon attachment. For instance, the cover software may be triggered by the attachment of the active cover to the terminal to reject all incoming messages, only allow incoming calls from certain numbers, and so on.

In one embodiment the active cover may be adapted for playing games on the terminal, having dedicated gaming buttons and an analog joystick, e.g. as indicated in Fig. 6.

An active cover may also include particular alarm functions for indicating incoming calls or messages, by illuminating the shell of the cover.

Some terminals include a calculator function. However, it is generally quite simple, and in one embodiment an active cover may include a more advanced calculator with buttons for more complex operations, such as logarithmic calculation and integration.

One embodiment of an active cover includes a Memory Stick reader, and can thus provide an increased memory for the terminal.

Another embodiment includes a mini torch, powered by the terminal battery or by its own power source.

The active cover may be a media player, such as an FM radio, or a digital music player capable of retrieving audio either from a carrier or from a software memory. Today such digitally stored audio systems include the Mini Disc system and the MP3 format, but the future will of course provide other alternatives.

In one embodiment the active cover is adapted to interact with a further component. For instance, an active cover may be devised to interact with a cordless headset through a suitable channel, such as by IR or radio, e.g. bluetooth. This way the terminal can easily be adapted to be able to cooperate with such a cordless headset even though that feature was not included when the terminal was purchased. The headset could even be packaged and sold together with the active cover. Such an active cover may also include a holder for the headset, and or a charger for the headset, such that the headset may be charged by either a special battery or capacitor in the active cover, or by the battery of the terminal.

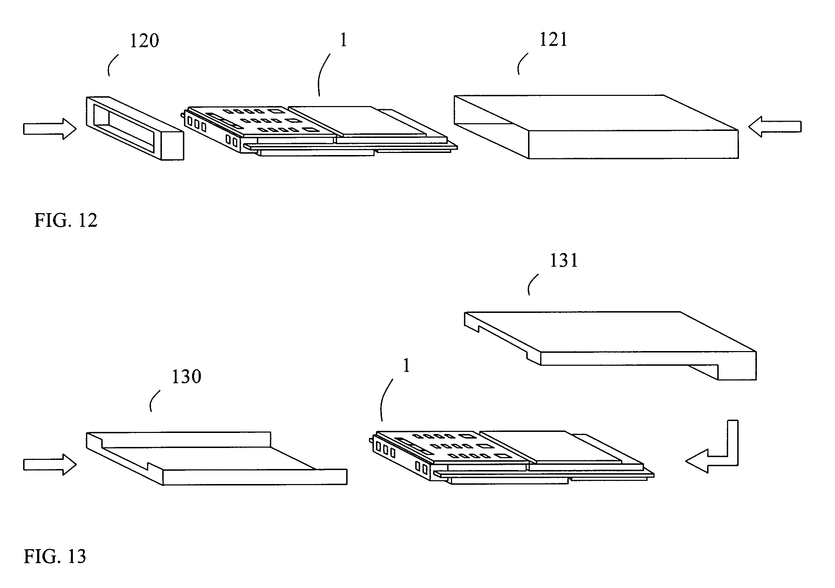

Fig. 12 illustrates an embodiment of the invention, wherein a set of attachable covers include a main cover 121 and a bottom cover 120. The bottom cover 120 is provided with a recess for allowing access to the system connector 51 of the terminal core 1. The main cover 121 covers a major part of the terminal core 1, whereas the bottom cover covers only a minor part. Still, both covers 120, 121 may included functional members adding to or modifying the functions of the terminal.

Fig. 13 illustrates yet another way of combining cover pieces in a set of covers. The front 131 and rear 130 covers are slid onto the terminal core 1, and are preferably latched into engagement by suitable attaching means. The skilled person will realise that the specific arrangement for attaching the covers to the core terminal 1 may be varied in many ways, and that the disclosed embodiments only represents examples.

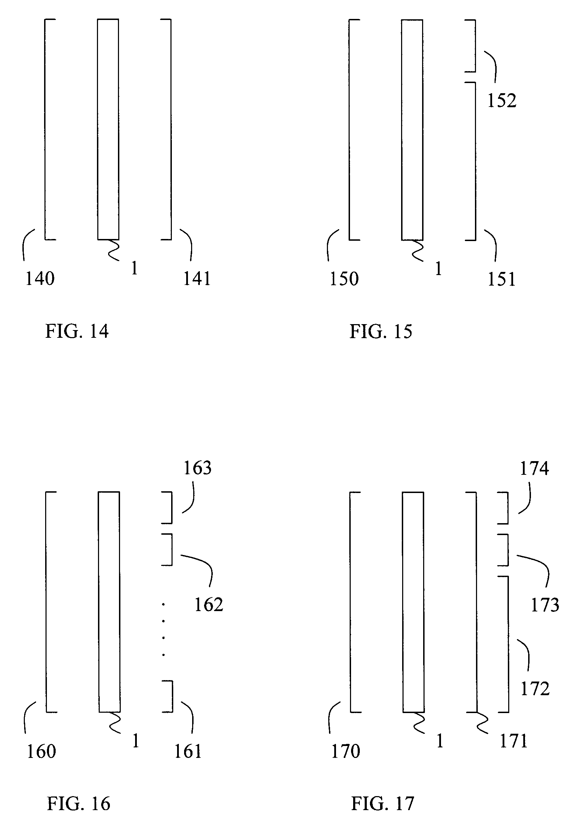

Figs 14 to 17 illustrate different combinations of terminal cores 1 and cover sets, in different embodiments of the invention. Fig. 14 corresponds to Fig. 3, where a first cover 140 and a second cover 141 are attachable to the terminal core 1.

In Fig. 15 a first cover 150 is attachable to one face of the core terminal 1, whereas there are two covers 151, 152 on the other side of the terminal core 1.

Fig. 16 illustrates a further modified version of the embodiment of Fig. 15. Herein, a plurality of covers or cover modules 161, 162, 163 are disposed on one side of the terminal core 1, side by side. The other side of the terminal core 1 is attachable to a full cover 160.

Finally, Fig. 17 illustrates an embodiment wherein plural covers or cover modules 171 - 174 are attached to one side of the terminal core 1, in at least two layers. For this embodiment the intermediate cover module 171 preferably also comprises a cover connector for allowing access for the outer cover modules 172 - 174 to the terminal core data processing means and battery. By the embodiments of Figs 15 to 17 it is possible for a user to add several features or functions to his or her terminal core 1.

The principles of the present invention have been described in the foregoing by examples of embodiments or modes of operations. However, the invention should not be construed as being limited to the particular embodiments discussed above. A skilled person would realise that the accommodation of an active cover with full system bus connectivity to the terminal gives rise to many further advantages or possibilities than those listed in the instant specification. By the disclosed invention, the integrated functions in the outer cover can be developed separately and added in a later stage of the product development. This way it is also possible to extend the time the product is on the market, by upgrading it with new functions in the covers, and upgraded software in the terminals. The above described embodiment should be regarded as illustrative rather than restrictive, and it should be appreciated that variations may be made in those embodiments by persons skilled in the art, without departing from the scope of the present invention as defined by the appended claims.

## Claims

1. A modular radio communication terminal (40), comprising a user input and output interface (18,19), data processing means for controlling terminal functions, and a releasable cover (30), wherein attaching means (36,27) are provided for releasable attachment of the cover, **characterised in that** said radio communication terminal comprises a stripped terminal core (1) carrying radio communication means and said user input and output, and **in that** a first cover comprises an auxiliary functional member (32) that is added to the functions of the terminal core when the first cover is attached thereto.

2. The modular radio communication terminal as recited in claim 1, **characterised in that** said terminal core (1) comprises the data processing means and a cover connector (17) connected to the data processing means, and said first cover comprises a terminal connector (34) connected to the auxiliary functional member, wherein said cover connector and terminal connector are devised to provide communicative connection for the auxiliary functional member of an attached first cover to the data processing means of the terminal core.

3. The modular radio communication terminal as recited in claim 2, **characterised in that** said first cover comprises a further cover connector connected to said terminal connector, and further attaching means, such that attachment of a second cover (172) on the first cover provides access for a further functional member in said second cover to said data processing means.

4. The modular radio communication terminal as recited in any of the previous claims, **characterised in that** in said first cover comprises a shell member (30) devised to cover a portion of a front face of the terminal core.

5. The modular radio communication terminal as recited in any of the previous claims, **characterised in that** in said first cover comprises a shell member (20) devised to cover a portion of a rear face of the terminal core.

6. Disconnectable cover (30) for a modular radio communication terminal (40) according to any of the previous claims 1 - 5, comprising attaching means (36) for releasable attachment of the cover to a terminal core (1), **characterised in that** said cover comprises a terminal connector (34) devised to provide bus connectivity with said terminal upon attachment, and an auxiliary functional member (32,35) connected to said terminal connector for providing a function to the terminal when the cover is attached thereto.

7. The disconnectable cover as recited in claim 6, **characterised in that** said auxiliary functional member is devised to affect or add to the function of an attached terminal core, and comprises a micro controller (35).

8. The disconnectable cover as recited in claim 6 or 7, **characterised in that** the terminal connector comprises a biased resilient connector element, connectable to conductive connection pads arranged in the cover connector of the terminal core.

9. The disconnectable cover as recited in claim 6, **characterised in that** said functional member comprises a touch-sensitive display (71).

10. The disconnectable cover as recited in claim 6, **characterised in that** said functional member comprises a speaker (81,111) for hands free operation.

11. The disconnectable cover as recited in claim 6, **characterised in that** said functional member comprises a digital image recorder (91).

12. The disconnectable cover as recited in any of the previous claims 6 - 11, **characterised in that** said cover is a first cover, directly attachable to a terminal core, wherein said first cover comprises a further cover connector connected to said terminal connector, and further attaching means, such that attachment of a second cover (172) on the first cover provides access for a further functional member in said second cover to said data processing means.

13. A terminal core (1) for a modular radio communication terminal (40) according to any of the previous claims 1 - 5, comprising data processing means and attaching means (27) for releasable attachment of a cover (30) to the terminal core, **characterised in that** said terminal core carries radio communication means and said user input and output, and **in that** functions of the terminal core may be affected or added by attachment of a first cover comprising an auxiliary functional member (32).

14. The terminal core as recited in claim 13, **characterised in that** said it comprises a cover connector (17) connected to the data processing means, such that attachment of a cover (30) carrying an auxiliary functional member (32) and a terminal connector (34) connected to the auxiliary functional member, provides an auxiliary function to the terminal core through the cooperating cover and terminal connectors.

15. The terminal core as recited in claim 14, **characterised in that** it comprises a main terminal PCB (10) carrying electronic circuits (11) for the terminal, and an additional PCB (54) connected to said electronic circuits, wherein said cover connector is disposed on said additional PCB.

16. The terminal core as recited in claim 14, **characterised in that** said it comprises a plurality of cover connectors (17) connected to the data processing means, for attachment of plural covers.
